# EUROPÄISCHE PATENTSCHRIFT

(11) **EP 1 915 661 B1**
(45) Veröffentlichungstag und Bekanntmachung des Hinweises auf die Patenterteilung: **17.06.2015**
(21) Anmeldenummer: 06777767.2
(22) Anmeldetag: 13.07.2006
(51) Int. Cl.: G06F 1/26, G06F 13/42, H04B 3/54

(54) **VORRICHTUNG ZUR OPTIMIERUNG DES LEISTUNGSVERBRAUCHS EINER ELEKTRISCHEN SCHALTUNGSKOMPONENTE**
DEVICE FOR OPTIMISING THE ENERGY CONSUMPTION OF AN ELECTRIC CIRCUIT COMPONENT
DISPOSITIF POUR OPTIMALISER LA CONSOMMATION DE PUISSANCE D'UN COMPOSANT DE CIRCUIT ELECTRIQUE

(30) Priorität: 18.08.2005 DE 102005039438
(43) Veröffentlichungstag der Anmeldung: 30.04.2008
(73) Patentinhaber: Endress+Hauser GmbH+Co. KG, 79689 Maulburg (DE)
(72) Erfinder: MICHALSKI, Bernhard, 79689 Maulburg (DE)
(74) Vertreter: Andres, Angelika Maria
(86) Internationale Anmeldenummer: PCT/EP2006/064219
(87) Internationale Veröffentlichungsnummer: WO 2007/020141

(56) Entgegenhaltungen:
- EP-A- 1 174 841
- EP-A1- 0 794 480
- US-A- 4 926 158
- US-A- 5 089 974

## Beschreibung

Die vorliegende Erfindung betrifft eine Vorrichtung zur Optimierung des Leistungsverbrauchs einer elektrischen Schaltungskomponente in einer Betriebs- und Auswerteschaltung eines Zweileiter-Feldgeräts, wobei eine Regel-/Steuereinheit vorgesehen ist, die die elektrische Schaltungskomponente getaktet einschaltet, wobei eine Energieversorgungseinheit zur Versorgung der Schaltungskomponente mit Energie vorgesehen ist und wobei an zumindest einem Ausgang, zumindest einem Eingang und/oder einem Versorgungseingang der elektrischen Schaltungskomponente zumindest ein Energiespeicherndes Bauteil vorgesehen ist.

Die Fortschritte der Mikroelektronik in den letzten Jahren haben zu einer Miniaturisierung von Feldgeräten und Integration von Funktionalitäten geführt, die in der Automatisierungstechnik eine effektive und kostengünstige Anwendung von energiesparenden, integrierten, dezentralen Systemen bewirkte. So werden in den Sensoren und Aktoren nicht nur die Messwerte ermittelt, sondern schon die Messwerte vorverarbeitet und linearisiert. Weiterhin ist eine Selbstdiagnose des Sensors oder Aktors implementiert. Die Vorraussetzung für das Einbringen dieser dezentralen Funktionalitäten in ein geschlossenes Automatisierungskonzept mit "intelligenten" Sensoren und Aktoren ist ein erhöhter Informations- und Datenaustausch dieser dezentralen Einheiten untereinander und mit einem Leitsystem. In der Automatisierungstechnik sind aus diesem Grund in den letzten Jahren eine Fülle von Feldbussystemen entstanden, die entweder firmenspezifische Anwendungsbereiche (z.B. BITBUS, CAN, MODBUS, RACKBUS) abdecken oder solche, die einer internationalen Normung (z.B. HART, PROFIBUS-PA, Foundation FIELDBUS, Ethernet) unterliegen. Die große Anzahl von Feldbussystemen, die derzeit in der industriellen Automatisierungstechnik und Prozessleittechnik eingesetzt sind, wird im Folgenden mit den allgemeinen Begriffen "Feldbusse bzw. Feldbussysteme" bezeichnet.

Die herkömmlichen Feldgeräte sind Netzgespeiste Vierleiter-Feldgeräte und weisen zumindest zwei elektrische Zuleitungen bzw. Leiter zur Energieversorgung des Feldgerätes aufweisen. Des Weiteren sind zwei weitere Signalleitungen als Feldbus erforderlich, die das Messwert abbildende Messsignal oder sonstige Kommunikationsdatensignale zwischen den dezentralen Einheiten und der Leitstelle übertragen. Allgemein wird dieses Messsignal oder Kommunikationsdatensignal entsprechend einem hierfür üblichen Standard, z.B. entsprechend dem 4-20 mA Stromschleifen-Standard, einem üblichen Frequenz-Standard oder einem digitalen Standard, erzeugt und übermittelt.

Darüber hinaus ist es in der Automatisierungstechnik auch üblich, den Feldbus der Feldgeräte in einer so genannten Zweileiter-Technik aufzubauen und miteinander zu verbinden, so dass deren Kommunikation und Energieversorgung über den Feldbus ausschließlich und gleichzeitig über eine Zweidrahtleitung erfolgt, wodurch der Verdrahtungsaufwand und somit die Verdrahtungskosten von vernetzten dezentralen Automatisierungssystemen verringert werden kann.

Beispiele für solche Zweileiter-Feldgeräte, insb. Zweileiter-Messgeräte oder Zweileiter-Stellgeräte, sind unter anderem der US-A 60 14 100 zu entnehmen.

Aus historisch bedingten Gründen und aus Gründen des intrinsischen Explosionsschutzes sind solche Zweileiter-Feldgeräten überwiegend so ausgelegt, dass eine auf einen zwischen 4 mA und 20 mA liegenden Wert eingestellte momentane Stromstärke des in dem als Stromschleife ausgebildeten einzigen Leitungspaar momentan fließenden Versorgungsstroms gleichzeitig auch den momentan vom Feldgerät erzeugten Messwert bzw. den momentan an das Feldgerät gesendeten Einstellwert repräsentiert. Bei Zweileiter-Feldgeräten ist die zur Verfügung stehende Eingangsleistung - auf beispielsweise 48 mW - erheblich beschränkt. Die Elektronik im Feldgerät muss so ausgelegt sein, dass sie auch bei einem minimalen Signalstrom von 4 mA noch zuverlässig arbeitet. Infolgedessen besteht ein Problem von solchen Zweileiter-Feldgeräten darin, dass die von der Feldgeräte-Elektronik umzusetzende elektrisch Leistung - im weiteren als "verfügbare Leistung" benannt - während des Betriebes des Zweileiter-Feldgerätes in praktisch unvorhersehbarer Weise starke Schwankungen aufweisen kann. Diesem Umstand Rechnung tragend, sind moderne Zweileiter-Feldgeräte mit einer 4-20 mA-Stromschleife daher üblicherweise so ausgelegt, dass ihre mittels eines in der Auswerte- und Betriebsschaltung vorgesehenen Mikrocomputers realisierte Geräte-Funktionalität änderbar ist, und somit die in der Betriebs- und Auswerteschaltung umgesetzte Leistung an die momentan verfügbare Leistung angepasst werden kann.

Eine geeignete Abstimmung der Feldgerät-Elektronik an die verfügbare Leistung kann z.B., wie auch in der US-A 60 14 100, der EP-A 1 174 841 oder der US-A 54 16 723 vorgeschlagen, durch Angleichen der momentan im Feldgerät umgesetzten Leistung an die momentan verfügbare Leistung erreicht werden, und zwar in der Art und Weise, dass einzelne Funktionseinheiten bzw. Schaltungskomponente der Betriebs- und Auswerteschaltung des Feldgerätes mit entsprechend variablen Taktraten betrieben, zeitweise abgeschaltet oder in einen Bereitschaftsmodus versetzt werden.

Ein Nachteil solcher getakteten Schaltungskomponente in der Betriebs- und Auswerteschaltung eines Zweileiters ist darin zu sehen, dass an die Ausgänge oder Eingänge der Schaltungskomponente angeschlossene Energiespeichernde Bauteile in jedem Taktzyklus vollständig entladen und geladen werden, da das Energiespeichernde Bauteil über einen parasitärer Entladungsstrom der zeitlich inaktive Schaltungskomponente entladen wird. Durch solche parasitären Umladungsprozesse und Umladungsströme der Energiespeichernden Bauteile geht Wodurch ein großer Anteil der in die Schaltungskomponente eingespeisten Energie, beispielsweise durch Wärmeentwicklung, verloren.

IN EP0794480 wird ein Batterieüberwachungssystem, das Entladungs- und Ladungszustände überwacht, beschrieben. Das Schaltelement, das zur Steuerung des Entladevorgangs, des Ladevorgangs und für die Erhaltung des Ladezustandes des internen Batteriemoduls eingesetzt wird, wird durch den Mikrokontroller als Schaltungskomponente je nach ermittelten Batteriezuständen des internen Batteriemoduls und der externen Batteriemodule geschaltet. Durch das Schaltelement entstehen keine parasitären Entladungsströme auf die Nicht-Master-Batteriezellen.

Ausgehend von den vorangehend am Beispiel herkömmlicher Zweileiter-Feldgeräten diskutierten Nachteile des Standes der Technik besteht eine Aufgabe der Erfindung darin, eine für ein Feldgerät bzw. ein Zweileiter-Feldgerät der beschriebenen Art geeignete Feldgeräte-Elektronik anzugeben, die es ermöglicht, den Energiehaushalt der Auswerte- und Betriebsschaltung, insbesondere von deren Schaltungskomponente zu verbessern.

Diese Aufgabe wird der Erfindung dadurch gelöst, dass zumindest eine Schalteinheit im Leitungspfad zwischen der elektrischen Schaltungskomponente und dem Energiespeichernden Bauteil vorgesehen ist, und dass die Regel/Steuereinheit die Schalteinheit synchronisiert zur Taktung der elektrischen Schaltungskomponente so ansteuert, dass ein in die Schaltungskomponente zurückfließender Entladungsstrom des Energiespeichernden Bauteils minimal ist.

Gemäß einer besonders bevorzugten·Ausführungsform der Erfindung ist ein Aktivierungseingang der elektrischen Schaltungskomponente vorgesehen, wobei die Regel-/Steuereinheit über eine Aktivierungssteuerleitung den Aktivierungseingang der elektrischen Schaltungskomponente getaktet ansteuert.

Eine weitere bevorzugte Ausführungsform der Erfindung ist, dass eine Energieversorgung der elektrischen Schaltungskomponente vorgesehen ist, und dass die Regel-/Steuereinheit über eine Versorgungssteuerleitung die Energieversorgung der elektrischen Schaltungskomponente getaktet ansteuert.

Eine vorteilhafte Ausführungsform der erfindungsgemäßen Lösung ist darin zu sehen, dass die Regel-/Steuereinheit die Schalteinheit für ein vorgebendes Zeitintervall und/oder gegenüber der elektrischen Schaltungskomponente mit einem Zeitversatz getaktet einschaltet.

Eine zweckmäßige Ausgestaltung der Erfindung ist, dass die Regel-/Steuereinheit ein entsprechendes Puls-Pausen-Verhältnis der Taktung der Schalteinheit bestimmt und/oder der elektrischen Schaltungskomponente den Leistungsverbrauch der elektrischen Schaltungskomponente auf einen minimalen Wert regelt.

Eine vorteilhafte Ausführungsform der erfindungsgemäßen Vorrichtung ist darin zu sehen, dass zumindest eine erste Messleitung zwischen der Regel-/Steuereinheit und der elektrischen Schaltungskomponente vorgesehen ist, und dass die Regel-/Steuereinheit über zumindest die erste Messleitung den aktuellen Leistungsverbrauch der elektrischen Schaltungskomponente ermittelt und anhand des aktuellen Leistungsverbrauchs das Puls-Pausen-Verhältnis der Taktung der elektrischen Schaltungskomponente einstellt.

Gemäß einer vorteilhaften Ausführungsform der erfindungsgemäßen Vorrichtung ist eine zweite Messleitung zwischen der Regel-/Steuereinheit und dem Energiespeichernden Bauteil vorgesehen, und wobei die Regel-/Steuereinheit über die zweite Messleitung zum Energiespeichernden Bauteil den aktuellen Wert der gespeicherten Energie ermittelt und anhand der aktuellen gespeicherten Energie im Energiespeichernden Bauteil das Puls-Pausen-Verhältnis der Taktung der Schalteinheit und/ oder der elektrischen Schaltungskomponente einstellt.

Gemäß einer vorteilhaften Ausführungsform der erfindungsgemäßen Vorrichtung wird vorgeschlagen, dass die Regel-/Steuereinheit einen zuletzt ausgegebenen Datenwert am Ausgang der Schaltungskomponente abspeichert, und anhand der Differenz des zuletzt gemessenen Datenwerts und des aktuellen Datenwerts das Puls-Pausen-Verhältnis der Taktung einstellt und/oder entsprechend anpasst.

Gemäß einer bevorzugten Ausführungsform der erfindungsgemäßen Vorrichtung ist vorgesehen dass die Schalteinheit integraler Bestandteil der Schaltungskomponente ist, und dass die integrierte Schalteinheit die Ausgänge, die Eingänge und/oder die Energieversorgungsanschlüsse in einen hochohmigen Zustand schaltet.

Eine weitere vorteilhafte Ausführungsform der erfindungsgemäßen Vorrichtung schlägt vor, dass die Schalteinheit als ein elektronischer Schalter ausgestaltet ist.

Die Erfindung wird anhand der nachfolgenden Zeichnungen näher erläutert. Zur Vereinfachung sind in den Zeichnungen identische Teile mit dem gleichen Bezugszeichen versehen worden. Es zeigt:
Fig. 1 eine schematische Gesamtdarstellung eines Feldbusses mit Zweileiter-Feldgeräten,
Fig. 2 eine schematische Darstellung einer Betriebs- und Auswerteschaltung eines Zweileiter-Feldgerätes,
Fig. 3 ein schematisches Zustandsdiagramm der Signale in der in Fig. 2 dargestellten Betriebs- und Auswerteschaltung.

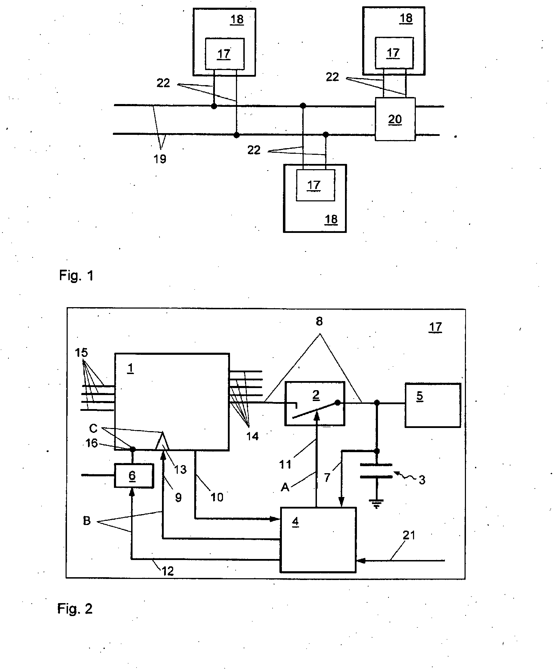

Das in Fig. 1 dargestellte Blockdiagramm stellt ein Automatisierungssystem zur Prozessparametererfassung, -auswertung und -übertragung mit einem Feldbus 19 und mit Zweileiter-Feldgeräten 18 dar. Meist sind Betriebs- und Auswerteschaltung 17 der Zweileiter-Feldgeräte 18 in einer Zweileiter Technik in der Art und Weise ausgebildet, dass sie mit einem der üblichen externen Feldbusse 19 zusammenarbeiten können. Dies kann einerseits, wie im Fig. 1 gezeigt, durch direkten Anschluss über eine Stromschleife 22 an das Feldbussystem 19, z.B. entsprechend dem FIELDBUS-Protokoll erfolgen, und andererseits kann das Zusammenarbeiten unter Zwischenschaltung eines Buskopplers 20, z.B. entsprechend dem so genannten HART-Protokoll, indirekt erfolgen.

Die Datenübertragung bzw. Kommunikation über den Feldbus 19 erfolgt beispielsweise nach dem CAN-, HART-, PROFIBUS DP-, PROFIBUS FMS-, PROFIBUS PA-, oder FOUNDATION FIELDBUS- Standard sowie mit den entsprechenden Übertragungs-Protokollen.

In Fig. 2 ist beispielsweise eine erfindungsgemäße Ausgestaltung der Betriebs- und .Auswerteschaltung 17 eines Zweileiter-Feldgerätes 18 dargestellt. Um mit dem Energieverbrauch des Zweileiter-Feldgerätes 18 unter der geforderten Grenze der zur Verfügung gestellten Energie bleiben zu können, werden im allgemeinen Schaltungskomponente 1 der Betriebs- und Auswerteschaltung 17, die nicht ständig aktiv sein müssen, von einer Regel-/Steuereinheit 4 entsprechend aus einen oder in einen wenig Energie verbrauchenden Bereitschaftszustand geschaltet. Als schaltbare Schaltungskomponente 1 kommen in diesen Fällen meist aktive Halbleiterbauelemente, wie Prozessoren und Logik-Gatter, oder analoge Schaltungskomponente mit einem Aktivierungs-/Deaktivierungs-Eingang zum Einsatz.

Diese Halbleiterbauelemente können auf unterschiedliche Art und Weise im Wechsel in einen aktiven und einen nicht aktiven Zustand versetzt werden. Eine Vielzahl von analogen und digitalen Halbleiterbauelementen sind mit einem Aktivierungseingang (Enable) ausgestattet, der es erlaubt die Schaltungskomponente 1 bzw. das Halbleiterbauelement in einen nicht aktiven Zustand zu versetzen, so dass keine oder kaum Energieverbrauchenden Querströme in der Schaltungskomponente 1 fließen können. Der Aktivierungseingang 13 unterbricht beispielsweise hierzu in einer digital arbeitenden Schaltungskomponente 1 die Taktleitung des Systemtakts oder schaltet beispielsweise bei analog arbeitender Schaltungskomponente 1 die die Arbeitspunkte einstellenden Stromquellen aus. Ist kein Aktivierungseingang 13 an der Schaltungskomponente 1 vorhanden, wird entsprechend die Energieversorgung 6 der Schaltungskomponente 1 aus und wieder ein geschaltet. Die Ansteuerung der Energieversorgung 6 über eine Versorgungsteuerleitung 12 oder die Ansteuerung des Aktivierungseingangs 13 der Schaltungskomponente 1 über einen Aktivierungssteuerleitung 9 mit einem Taktsignal B erfolgt durch die Regel-/Steuereinheit 4, die entsprechend der verfügbaren Leistung und der im Zweileiter-Feldgerät 18 umgesetzten Leistung die Taktrate des Taktsignals B, mit dem die Schaltungskomponente 1 ein- und ausgeschaltet wird, einstellt. Die Regel-/Steuereinheit 4 ermittelt über einen Messabgriffsleitung 21 an der Stromschleife 22 hierzu die verfügbare Leistung die vom Feldbus 19 durch das vom Zweileiter-Feldgerät 18 eingestellte oder empfangen Messsignal, das entsprechend einem hierfür üblichen Standard, z.B. dem 4-20 mA - Stromschleifen-Standard, einem üblichen Frequenz-Standard oder einem üblichen digitalen Standard, übermittelt wird. Mittels einer ersten Messleitung 10 ermittelt die Regel-/Steuereinheit den aktuellen Leistungsverbrauch der Schaltungskomponente 1 oder der gesamten Betriebs- und Auswerteschaltung 17. Aus der Kenntnis der momentan verfügbaren Leistung, der momentan benötigten Leistung und den zukünftigen Schätzwerten berechnet die Regel-/Steuereinheit 4 die Taktrate und das Puls-Pausen-Verhältnis, mit der die Schaltungskomponente 1 der Betriebs- und Auswerteschaltung 17 des Zweileiter-Feldgeräts 18 in den aktiven und nicht aktiven Zustand versetzt wird.

Jedoch ergibt sich durch die Taktung der Schaltungskomponente 1 das Problem, dass Energiespeichernde Bauteile 3, wie Kondensatoren und Spulen, sich an einem Ausgang 14, einem Eingang 15 und/oder an einem Versorgungseingang 16 über die momentan inaktive Schaltungskomponente 1 entladen können. Falls die Energieversorgung 6 der Schaltungskomponente 1 getaktet ein- und ausgeschaltet wird und eine große Kapazität zur Spannungsversorgungsabstützung vorgesehen ist, was nicht explizit in der Fig. 2 gezeigt ist, so wird diese Kapazität während einer Taktperiode einmal zumindest teilweise entladen und wieder aufgeladen. Der Energieverbrauch durch das Auf- und Entladen der Kapazität ist linear abhängig vom Kapazitätswert und von der Taktfrequenz, sowie quadratisch abhängig von der Versorgungsspannung. Wenn andererseits der Aktivierungseingangs 13 der Schaltungskomponente 1 getaktet angesteuert wird und die Energieversorgung 6 eine stabile Versorgungsspannung liefert, wird die Kapazität zur Spannungsversorgungsabstützung nicht mehr in einem Taktzyklus entladen und wieder aufgeladen. Somit treten keine parasitären Entladungsströme der Kapazität zur Spannungsversorgungsabstützung zwischen der Energieversorgung 6 und der Schaltungskomponente 1.

Des Weiteren gibt es Schaltungsaufbauten, die am Ausgang 14 oder am Eingang 15 einer Schaltungskomponente 1 in einem Leitungspfad 8 zur Folgeschaltung 5 einen Kondensator als Energiespeicherndes Bauteil 3 zur Glättung des Signals aufweisen. In Fig. 2 ist eine Variante gezeigt, bei der im Leitungspfad 8 zwischen dem Ausgang 14 der Schaltungskomponente und einer Folgeschaltung 5 ein Energiespeicherndes Bauteil 3, z.B. als Kondensator, gegen Bezugsmasse eingebaut ist. Dieser Schaltungsaufbau kommt beispielsweise zustande, wenn die Folgeschaltung 5 mit dem Kondensator bzw. dem Energiespeichernden Bauteil 3 nach einer schnellen Signalgleichrichter-, Logarithmier- oder Tiefpassschaltung ausbildet wird. Die im Energiespeichernden Bauteil 3 bzw. im Kondensator enthaltene Energie kann bei einer inaktiven, ausgeschalteten Schaltungskomponente 1 über diese teilweise entladen werden. Um die Entladungsströme zwischen den Eingängen 15, den Ausgängen 14 und dem Versorgungseingang 16 der Schaltungskomponente 1 und dem Energiespeichernden Bauteil 3 zu minimieren, ist in diese Leitungspfade 8 eine Schalteinheit 2 integriert, die synchron zur Taktung der Schaltungskomponente 1 oder deren Energieversorgung 6 von der Regel/-Steuereinheit 4 über eine Schalteinheitsteuerleitung 11 angesteuert und getaktet wird. Durch diese Auftrennung des Leitungspfades 8 durch die Schalteinheit 2 bleibt die Ladung des Energiespeichernden Bauteils 3 während der inaktiven Phase der Schaltungskomponente 1 zumindest teilweise bestehen, und es können keine parasitären Entladungsströme über die Schaltungskomponente 1 entstehen. In einer nachfolgenden aktiven Phase des Taktzyklus der Schaltungskomponente 1 wird die Ladung des Energiespeichernden Bauteils 3 auf den der Schaltungskomponente bereitgestellten Wert umgeladen. Die Schalteinheit 2 bildet mit dem Energiespeichernden Bauteil 3 gewissermaßen ein Abtast-Halte-Glied, welches beispielsweise bei Verwendung eines Analog-Digital-Konverters als Folgeschaltung 5 eingesetzt wird, um die Ladung bzw. den analogen Messwert konstant zu halten.

Über die Taktrate und das Tastverhältnis der Taktung lässt sich die eingesparte Leistung einstellen. Hierzu wird von der Regel-/Steuereinheit 4 der aktuelle Leistungsverbrauch der Schaltungskomponente 1 und der zuletzt ausgegebene Datenwert am Ausgang 14 der Schaltungskomponente 1 über die erste Messleitung 10 und der aktuelle Ladungszustand des Energiespeichernden Bauteils über eine zweite Messleitung 7 bestimmt. Die Regel-/Steuereinheit 4 berechnet aus diesen ermittelten Werten die notwendige Taktrate und das notwendige Puls-Pausen-Verhältnis, mit dem die Schalteinheit 2 angesteuert wird.

Es ist auch denkbar, dass die Regel-/Steuereinheit 4 und/oder die Schalteinheit 2 direkt in der Schaltungskomponente 1, z.B. einen Signalprozessor, integriert ist, so dass die Schaltungskomponente 1 die Ausgänge 14, Eingänge 15 und Versorgungseingang 16, getaktet von einer internen Regel-/Steuereinheit 4 , während einer inaktiven Phase der Schaltungskomponente 1 in einen hochohmigen Zustand versetzt.

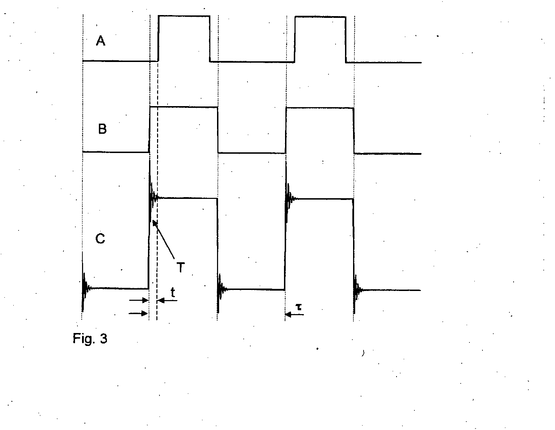

In Fig. 3 ist ein Zustandsdiagramm der beispielhaften Signalströme des Schaltsignals A in der Schalteinheitsteuerungsleitung 11, des Taktsignals B der Aktivierungssteuerleitung 9 bzw. Versorgungssteuerleitung 12 und des Versorgungssignal C in der Schaltungskomponente 1 bzw. in dem Versorgungseingang 12 aus Fig. 2 aufgezeigt. Die Regel-/Steuereinheit 4 erzeugt ein Taktsignal B mit der Periodendauer t , das die Schaltungskomponente 1 durch den Aktivierungseingang 13 über die Aktivierungsteuerleitung 9 oder durch den Versorgungseingang 16 über die Versorgungssteuerleitung 12 und die Energieversorgung 6 ansteuert. Dieses Taktsignal B ruft in der Schaltungskomponente 1 ein Versorgungssignal C hervor, das ein Einschwingverhalten der Einschwingdauer t in einem Einschwingbereich T des Versorgungssignals C aufweist. Das Schaltsignal A, mit dem die Schalteinheit 2 durch die Regel-/Steuereinheit 4 angesteuert wird und somit der Leitungspfad 8 geschlossen wird, weist ein in Bezug auf das Taktsignal B um die Einschwingdauer t verzögertes Schaltsignal A auf.

Dieses Einschwingverhalten der Schaltungskomponente 1 kommt dadurch zustande, dass die Schaltungskomponente 1 eine bestimmte Einschwingzeit t benötigt, bis der stationäre Zustand erreicht ist, in dem die Spannungsversorgung stabil anliegt und der Strom konstant fließt. Oder anders ausgedrückt, dieses Einschwingverhalten der Schaltungskomponente 1 kommt dadurch zustande, dass Halbleiterbauelemente aus Transistoren aufgebaut sind, die alle eine vorrangig kapazitive Rückwirkung zwischen Ausgang und Eingang besitzen. Bei bipolaren Transistoren ist dieser Effekt viel stärker als bei MOS-Transistoren.

Durch den Zeitversatz des Taktsignals B zum Schaltsignal A wird das Signal in dem Einschwingbereich T, in der die Schaltungskomponente 1 noch nicht korrekt arbeitet, nicht an die Folgeschaltung 5 und das Energiespeichernde Bauteil 3 weiter gegeben.

### Bezugszeichenliste

- 1.: Schaltungskomponente
- 2.: Schalteinheit
- 3.: Energiespeicherndes Bauteil
- 4.: Regel-/Steuereinheit
- 5.: Folgeschaltung
- 6.: Energieversorgung
- 7.: zweite Messleitung
- 8.: Leitungspfad
- 9.: Aktivierungssteuerleitung
- 10.: erste Messleitung
- 11.: Schalteinheitsteuerleitung
- 12.: Versorgungssteuerleitung
- 13.: Aktivierungseingang
- 14.: Ausgang
- 15.: Eingang
- 16.: Versorgungseingang
- 17.: Betriebs- und Auswerteschaltung
- 18.: Zweileiter-Feldgerät, Feldgerät
- 19.: Feldbus, Feldbussystem
- 20.: Buskoppler
- 21.: Messabgriffsleitung
- A: Schaltsignal
- B: Taktsignal
- C: Versorgungssignal
- T: Einschwingbereich
- t: Einschwingdauer, Einschwingzeit
- t: Periodendauer

## Patentansprüche

1. Vorrichtung zur Optimierung des Leistungsverbrauchs einer elektrischen Schaltungskomponente (1) in einer Betriebs- und Auswerteschaltung (17) eines Zweileiter-Feldgeräts (18), wobei eine Regel-/Steuereinheit (4) vorgesehen ist, die die elektrische Schaltungskomponente (1) getaktet in einer aktiven und einer inaktiven Phase schaltet, wobei eine Energieversorgungseinheit (6) zur Versorgung der Schaltungskomponente (1) mit Energie vorgesehen ist und wobei an zumindest einem Ausgang (14), zumindest einem Eingang (15) und/oder einem Versorgungseingang (16) der elektrischen Schaltungskomponente (1) zumindest ein energiespeicherndes Bauteil (3) vorgesehen ist,
**dadurch gekennzeichnet,**
**dass** zumindest eine Schalteinheit (2) in einem Leitungspfad (8) zwischen der schaltbaren elektrischen Schaltungskomponente (1) und dem energiespeichernden Bauteil (3) vorgesehen ist, und
**dass** die Regel-/Steuereinheit (4) die Schalteinheit (2) synchronisiert zur Taktung der elektrischen Schaltungskomponente (1) so ansteuert, dass durch Auftrennung des Leitungspfades (8) durch die Schalteinheit (2) die Ladung des energiespeichernden Bauteils (3) während der inaktiven Phase der Schaltungskomponente (1) zumindest teilweise bestehen bleibt und dass keine parasitären Entladungsströme über die Schaltungskomponente (1) entstehen können, so dass ein in die Schaltungskomponente (1) zurückfließender Entladungsstrom des energiespeichernden Bauteils (3) minimal ist.

2. Vorrichtung nach Anspruch 1,
**dadurch gekennzeichnet,**
**dass** ein Aktivierungseingang (13) der elektrischen Schaltungskomponente (1) vorgesehen ist, und
**dass** die Regel-/Steuereinheit (4) über eine Aktivierungssteuerleitung (9) den Aktivierungseingang (13) der elektrischen Schaltungskomponente (1) getaktet ansteuert.

3. Vorrichtung nach Anspruch 1,
**dadurch gekennzeichnet,**
**dass** eine Energieversorgung (6) der elektrischen Schaltungskomponente (1) vorgesehen ist, und
**dass** die Regel-/Steuereinheit (4) über eine Versorgungssteuerleitung (12) die Energieversorgung (6) der elektrischen Schaltungskomponente (1) getaktet ansteuert.

4. Vorrichtung nach Anspruch 1, 2 oder 3,
**dadurch gekennzeichnet,**
**dass** die Regel-/Steuereinheit (4) die Schalteinheit (2) für ein vorgebendes Zeitintervall und/oder gegenüber der elektrischen Schaltungskomponente (1) mit einem Zeitversatz getaktet einschaltet.

5. Vorrichtung nach Anspruch 1, 2, 3 oder 4,
**dadurch gekennzeichnet,**
**dass** die Regel-/Steuereinheit (4) ein entsprechendes Puls-Pausen-Verhältnis der Taktung der Schalteinheit (2) bestimmt und/oder der elektrischen Schaltungskomponente (1) den Leistungsverbrauch der elektrischen Schaltungskomponente (1) auf einen minimalen Wert regelt.

6. Vorrichtung nach Anspruch 1, 2, 3, 4 oder 5,
**dadurch gekennzeichnet,**
**dass** zumindest eine erste Messleitung (10) zwischen der Regel-/Steuereinheit (4) und der elektrischen Schaltungskomponente (1) vorgesehen ist, und dass die Regel-/Steuereinheit (4) über zumindest die erste Messleitung (10) den aktuellen Leistungsverbrauch der elektrischen Schaltungskomponente (1) ermittelt und anhand des aktuellen Leistungsverbrauchs das Puls-Pausen-Verhältnis der Taktung der elektrischen Schaltungskomponente (1) einstellt.

7. Vorrichtung nach Anspruch 1, 2, 3, 4, 5 oder 6,
**dadurch gekennzeichnet,**
**dass** eine zweite Messleitung (7) zwischen der Regel-/Steuereinheit (4) und dem energiespeichernden Bauteil (3) vorgesehen ist, und
**dass** die Regel-/Steuereinheit (4) über die zweite Messleitung (7) zum Energiespeichernden Bauteil (3) den aktuellen Wert der gespeicherten Energie ermittelt und anhand der aktuellen gespeicherten Energie im energiespeichernden Bauteil (3) das Puls-Pausen-Verhältnis der Taktung der Schalteinheit (2) und/oder der elektrischen Schaltungskomponente (1) einstellt.

8. Vorrichtung nach Anspruch 5, 6 oder 7,
**dadurch gekennzeichnet,**
**dass** die Regel-/Steuereinheit (4) einen zuletzt ausgegebenen Datenwert am Ausgang (14) der Schaltungskomponente (1) abspeichert, und anhand der Differenz des zuletzt gemessenen Datenwerts und des aktuellen Datenwerts das Puls-Pausen-Verhältnis der Taktung einstellt und/oder entsprechend anpasst.

9. Vorrichtung nach Anspruch 1, 4, 5 oder 7,
**dadurch gekennzeichnet,**
**dass** die Schalteinheit (2) integraler Bestandteil der Schaltungskomponente (1) ist, und
**dass** die integrierte Schalteinheit (2) die Ausgänge (14), die Eingänge (15) und/oder die Energieversorgungsanschlüsse (16) in eine hochohmigen Zustand schaltet.

10. Vorrichtung nach Anspruch 1, 4, 5 oder 7,
**dadurch gekennzeichnet,**
**dass** die Schalteinheit (2) als ein elektronischer Schalter ausgestaltet ist.

## Claims

1. Unit designed to optimize the power consumption of an electrical circuit component (1) in an operating and evaluation circuit (17) of a two-wire field device (18), where a regulation/control unit (4) is provided that switches the electrical circuit component (1) in an active and inactive phase in a clocked manner, wherein a power supply unit (6) is provided to supply power to the circuit component (1) and wherein at least one energy-storage component (3) is provided at least at one output (14), at least at one input (15) and/or one supply input (16) of the electrical circuit component (1), **characterized in that**
at least one switch unit (2) is provided in a signal path (8) between the switchable electrical circuit component (1) and the energy-storage component (3), and
**in that** the regulation/control unit (4) controls the switch unit (2) in a manner that is synchronized with the clock cycle of the electrical circuit component (1) in such a way that as a result of the partition of the signal path (8) by the switch unit (2), the charge of the energy-storage component (3) is at least partially retained during the inactive phase of the circuit component (1) and that no parasitic discharge currents can occur via the circuit component (1) such that there is minimal discharge current from the energy-storage component (3) flowing back into the circuit component (1).

2. Unit as claimed in Claim 1,
**characterized in that**
an activation input (13) of the electrical circuit component (1) is provided, and **in that** the regulation/control unit (4) controls the activation input (13) of the electrical circuit component (1) in a clocked manner via an activation control line (9).

3. Unit as claimed in Claim 1,
**characterized in that**
a power supply (6) of the electrical circuit component (1) is provided, and
**in that** the regulation/control unit (4) controls the power supply (6) of the electrical circuit component (1) in a clocked manner via a supply control line (12).

4. Unit as claimed in Claim 1, 2 or 3,
**characterized in that**
the regulation/control unit (4) switches on the switch unit (2) in a clocked manner for a predefined interval and/or with a time offset in relation to the electrical circuit component (1).

5. Unit as claimed in Claim 1, 2, 3 or 4,
**characterized in that**
the regulation/control unit (4) determines an appropriate pulse/pause ratio for the clocked sequence of the switch unit (2) and/or regulates the power consumption of the electrical circuit component (1) to a minimum value.

6. Unit as claimed in Claim 1, 2, 3, 4 or 5,
**characterized in that**
at least a first measuring line (10) is provided between the regulation/control unit (4) and the electrical circuit component (1), and **in that** the regulation/control unit (4) determines the current power consumption of the electrical circuit component (1) via the first measuring line (10) at least, and sets the pulse/pause ratio of the clocked sequence of the electrical circuit component (1) on the basis of the current power consumption.

7. Unit as claimed in Claim 1, 2, 3, 4, 5 or 6,
**characterized in that**
a second measuring line (7) is provided between the regulation/control unit (4) and the energy-storage component (3) and **in that** the regulation/control unit (4) determines the current value of the stored power via the second measuring line (7) to the energy-storage component (3), and sets the pulse/pause ratio of the clocked sequence of the switch unit (2) and/or the electrical circuit component (1) using the energy currently saved in the energy-storage component (3).

8. Unit as claimed in Claim 5, 6 or 7,
**characterized in that**
the regulation/control unit (4) saves a data value last output at the output (14) of the circuit component (1), and sets the pulse/pause ratio of the clocked cycle and/or adapts it accordingly on the basis of the difference between the last data value measured and the current data value.

9. Unit as claimed in Claim 1, 4, 5 or 7,
**characterized in that**
the switch unit (2) is an integral part of the circuit component (1), and
**in that** the integrated switch unit (2) switches the outputs (14), the inputs (15) and/or the power supply connections (16) to a high-impedance state.

10. Unit as claimed in Claim 1, 4, 5 or 7,
**characterized in that**
the switch unit (2) is designed as an electronic switch.

## Revendications

1. Dispositif destiné à l'optimisation de la consommation en énergie d'un composant de commutation électrique (1) dans un circuit d'exploitation et d'évaluation (17) d'un appareil de terrain (18) bifilaire, pour lequel est prévue une unité de régulation / contrôle (4), qui commute de façon cadencée le composant de commutation électrique (1) dans une phase active et une phase inactive, pour lequel est prévue une unité d'alimentation en énergie (6) destinée à l'alimentation en énergie du composant de commutation (1) et pour lequel est prévu sur au moins une sortie (14), au moins une entrée (15) et/ou une entrée d'alimentation (16) du composant de commutation électrique (1) au moins un composant accumulateur d'énergie (3),
**caractérisé**
**en ce qu'**est prévue au moins une unité de commutation (2) dans un circuit (8) entre le composant de commutation électrique (1) commutable et le composant accumulateur d'énergie (3), et
**en ce que** l'unité de régulation / contrôle (4) commande de façon synchronisée l'unité de commutation (2) pour la commande cadencée du composant de commutation électrique (1) de telle manière qu'à travers l'ouverture du circuit (8) par l'unité de commutation (2) la charge du composant accumulateur d'énergie (3) est conservée au moins partiellement pendant la phase inactive du composant de commutation (1) et de telle manière qu'aucun courant de décharge parasitaire ne puisse être généré à travers le composant de commutation (1), de sorte qu'un courant de décharge du composant accumulateur d'énergie (3), recirculant dans le composant de commutation (1), soit minimal.

2. Dispositif selon la revendication 1,
**caractérisé**
**en ce qu'**est prévue une entrée d'activation (13) du composant de commutation électrique (1), et
**en ce que** l'unité de régulation / contrôle (4) commande de façon cadencée via la ligne de commande d'activation (9) l'entrée d'activation (13) du composant de commutation électrique (1).

3. Dispositif selon la revendication 1,
**caractérisé**
**en ce qu'**est prévue une alimentation en énergie (6) du composant de commutation électrique (1), et
**en ce que** l'unité de régulation / contrôle (4) commande de façon cadencée l'alimentation en énergie (6) du composant de commutation électrique (1) par l'intermédiaire de la ligne de commande d'alimentation (12).

4. Dispositif selon la revendication 1, 2 ou 3,
**caractérisé**
**en ce que** l'unité de régulation / contrôle (4) enclenche de façon cadencée l'unité de commutation (2) pendant un intervalle de temps prédéfini et/ou avec un décalage temporel par rapport au composant de commutation électrique (1).

5. Dispositif selon la revendication 1, 2, 3 ou 4,
**caractérisé**
**en ce que** l'unité de régulation / contrôle (4) détermine un rapport impulsion / pause approprié pour la commande cadencée de l'unité de commutation (2) et/ou régule à une valeur minimum la consommation en énergie du composant de commutation électrique (1).

6. Dispositif selon la revendication 1, 2, 3, 4 ou 5,
**caractérisé**
**en ce qu'**est prévue une première ligne de mesure (10) entre l'unité de régulation / contrôle (4) et le composant de commutation électrique (1), et en ce que l'unité de régulation / contrôle détermine au moins par l'intermédiaire de la première ligne de mesure (10) la consommation d'énergie actuelle du composant de commutation électrique (1) et règle à l'appui de la consommation d'énergie actuelle le rapport impulsion / pause de la commande cadencée du composant de commutation électrique (1).

7. Dispositif selon la revendication 1, 2, 3, 4, 5 ou 6,
**caractérisé**
**en ce qu'**est prévue une deuxième ligne de mesure (7) entre l'unité de régulation / contrôle (4) et le composant accumulateur d'énergie (3), et en ce que l'unité de régulation / contrôle (4) détermine par l'intermédiaire de la deuxième ligne de mesure (7) la valeur actuelle de l'énergie accumulée par le composant accumulateur d'énergie (3), et règle à l'appui de l'énergie actuellement accumulée dans le composant accumulateur d'énergie (3) le rapport impulsion / pause de la commande cadencée de l'unité de commutation (2) et/ou du composant de commutation électrique (1).

8. Dispositif selon la revendication 5, 6 ou 7,
**caractérisé**
**en ce que** l'unité de régulation / contrôle (4) enregistre une valeur dernièrement émise sur la sortie (14) du composant de commutation (1), et règle et/ou adapte en conséquence, en s'appuyant sur la différence de la dernière valeur mesurée et de la valeur actuelle, le rapport impulsion / pause de la commande cadencée.

9. Dispositif selon la revendication 1, 4, 5 ou 7,
**caractérisé**
**en ce que** l'unité de commutation (2) fait partie intégrante du composant de commutation (1), et
**en ce que** l'unité de commutation (2) intégrée commute les sorties (14), les entrées (15) et/ou les connexions d'alimentation en énergie (16) dans un état de haute impédance.

10. Dispositif selon la revendication 1, 4, 5 ou 7,
**caractérisé**
**en ce que** l'unité de commutation (2) est conçue en tant qu'interrupteur électronique.
